# EUROPEAN PATENT APPLICATION

(11) **EP 0 738 628 A1**
(43) Date of publication of application: **23.10.1996**
(21) Application number: 96830211.7
(22) Date of filing: 15.04.1996
(51) Int. Cl.: B60R 21/02

(54) **Safety device for automobiles**

(30) Priority: 18.04.1995 IT FI950072
(71) Applicant: Luisi, Vincenzo, 55049 Viareggio (Lucca) (IT)
(72) Inventor: Luisi, Vincenzo, 55049 Viareggio (Lucca) (IT)
(74) Representative: Bardini, Marco Luigi

(57) **Abstract**

A safety device for automobiles thanks to which it is possible for drivers and front-seat passengers to avoid hitting their heads against the front of the interior of the automobile. It comprises an abutment member (5) for the forehead of the driver or passenger which extends in front of the seat to which it is connected in an adjustable manner, by means of a bracket (4) and a support (2), for its correct positioning with respect to the forehead of the driver or passenger. In particular, the abutment member is a cushioned rigid arm hinged to said bracket (4) which is, in turn, connected to said support (2) by means of a claw clutch (11,12) to regulate the inclination of the bracket (4).

## Description

The present invention relates to a safety device for automobiles. More precisely, the invention relates to a device which, in case of a collision of the vehicle with a fixed or moving obstacle, makes it possible for drivers and front-seat passengers to avoid hitting their heads against the front parts (dashboard, steering wheel, windshield) of the interior of the automobile.

A device of the above-mentioned type which is very well-known is the air-bag. Air-bags, now a base feature of most cars, are composed of a large balloon which, in a collision or violent impact of the vehicle against an obstacle, inflates instantaneously in the space between the driver (and when provided the passenger at his side) and the front part of the interior of the vehicle with the purpose of preventing the driver from being thrown against the steering wheel, dashboard or windshield and, in any case, if he is wearing a seat belt, from hitting his head against those parts of the interior.

The effectiveness of this known device is considered generally satisfactory and its incorporation in vehicles makes driving significantly safer. However, air-bags have the inconvenience that they make the driver lose control of the steering wheel and, therefore, of the vehicle, thus creating an extremely dangerous situation if, after impact, the vehicle continues to move.

Additionally, this device has an inconvenience of an essentially aesthetic nature, particularly bothersome in sportive vehicles. Such vehicles are generally equipped with special steering wheels whose aesthetic value is heavily compromised by the presence of an air-bag.

For the above reasons, the demand for an alternative device able to obtain the same results and level of safety without having the above-mentioned inconveniences is strongly felt.

This demand can be satisfied by the safety device according to the present invention characterized by the fact that it comprises an abutment member for the forehead of the driver or front-seat passenger which extends in front of the seat to which it is adjustably connected for its correct positioning with respect to the forehead. In one particularly preferred embodiment of the invention, the abutment element is an arm hinged to the end of a bracket which is, in turn, connected in an adjustable manner to a support protruding laterally from the seat. In particular, said arm is composed of a rigid core covered by an adequate layer of cushioning. In this way, when the device according to the invention is correctly positioned at the height of the driver's forehead, in a collision of the vehicle against a fixed or mobile obstacle, the driver, held to the seat by a safety belt, hits his head against the cushioned arm of the device without losing control of the steering wheel.

Further characteristics and advantages of the safety device for automobiles according to the present invention will become apparent in the following description of one of its possible embodiments, given as an example and not limitative, with reference to the attached drawings in which:
- figure 1 is a top plan view of the safety device according to the present invention mounted on the headrest of the seat;
- figure 2 is a side view of the device of figure 1 according to arrow F;
- figure 3 is a specular two-part side view of the claw clutch connection joint between the arm of the device and its support.

With reference to the above-mentioned figures, 1 indicates a generic headrest of a front seat for automobiles and 2 indicates a metallic support element fixed to the internal structure of the headrest in any known way. 3 indicates a connection head placed at one end of a bracket 4, at the free end of which an arm 5 is hinged. The arm 5 is formed by a rigid internal core (not shown) and an external cushion.

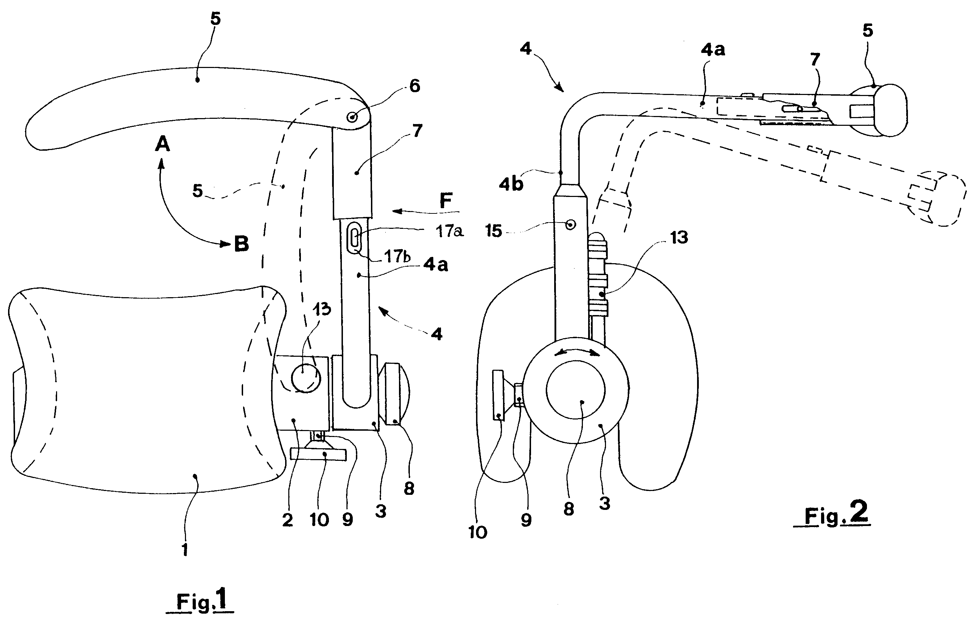

Bracket 4 lies on a vertical plane and is turned toward the front part of the seat, whereas cushioned arm 5 lies on a horizontal plane. Preferably, bracket 4 is formed of a first branch 4a hingedly connected to arm 5 and a second branch 4b rigidly extending from connection head 3, the first branch 4a and the second branch 4b being perpendicular to the one another. First branch 4a of bracket 4 is formed of two parts (shown in figure 2) engaging within one another in an axially adjustable manner and the external portion of said branch 4a is connected to arm 5 by means of a vertical pin 6 perpendicular to the lying plane of arm 5 and covered by covering 7. Thanks to this connection, arm 5 can be placed in a extended position, indicated with A, in front of the headrest and a resting position, indicated with B and a dashed line in figure 1, close to bracket 4 following a rotation of about 90° on pin 6.

Connection head 3 of bracket 4 is connected to support 2 by means of a threaded stem (not shown) extending from an adjustment knob 8. Accidental rotation of the threaded stem is prevented by a blocking screw 9 transversally forcing against said stem and being actuated by means of a knob 10.

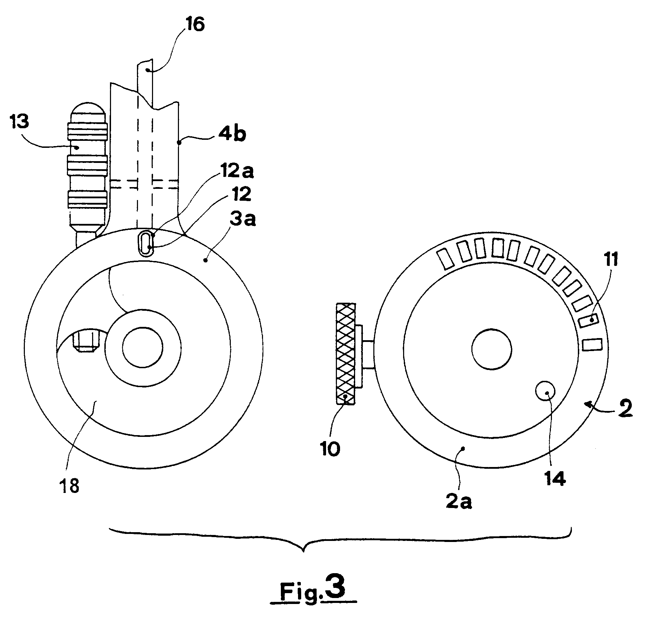

As shown in figure 3, a plurality of radially spaced notches 11 is formed on a base face 2a of support 2, whereas on the corresponding face 3a of connection head 3, there is provided a tooth 12, which elastically protrudes from a slit 12a, formed on face 3a, for snap fitting in and out of one of notches 11. Tooth 12 is formed at the end of a lever arm 16 extending inside second branch 4b of bracket 4 and having a radial projection 15 at the other end extending outwardly from a small window on branch 4b.

Furthermore, an adjusting screw 13 parallel to second branch 4b of bracket 4 passes through head 3 and its end extends in an internal recess 18 of head 3, whereas an eccentric ledge 14 for adjusting screw 13 is provided on base face 2a of support 2.

The claw clutch described above allows for the adjustment of the height of arm 5 in relation to the height at which the forehead of the driver is located when he is seated in the automobile. In fact, by rotating head 3 with respect to support 2 in a snapping manner, the inclination of bracket 4 can be adjusted by an amount sufficient to bring arm 5 to the desired height. In order to snap tooth 12 from one notch 11 to the next with a clockwise rotation of connection head 3 (when, in other words, one wishes to lower arm 5), tooth 12 must be temporarily disengaged from the notch in which it is initially engaged by pressing projection 15 acting as a button, against the action of a spring not shown to move lever 16 at the end of which tooth 12 is formed. The rotation in a counterclockwise direction, when one wishes to raise arm 5, is made easier by the fact that notches 11 have a flared shape for a smooth disengagement of tooth 12 from notch 11.

As shown in figure 2, the distance of arm 5 from headrest 1 can be advantageously adjusted by acting on the two mutually engaging parts of branch 4a. On one of these, aligned slots 17a are formed, while on the other, an elastically protruding button 17b is formed. By engaging button 17b in one or the other of said slots the length of branch 4a can be varied. The two above-mentioned parts are, moreover, formed in such a way as to ensure the alignment of the slot with the button and prevent their reciprocal rotation, for example by means of a slot guide and a transversal pin engaging therein. With a similar system it is also possible to vary the length of branch 4b of the bracket as this may be useful in cases in which the device according to the present invention is applied to a headrest whose height can be regulated.

The device according to the invention is extremely simple to use. In fact, the driver or passenger, after having seated himself, extends arm 5 to position A from resting position B and thus, acting on button 15 to release the snapping clutch, inclines bracket 4 to lower arm 5 to a height substantially equal to that of his forehead. When getting out of the automobile, the driver pushes back bracket 4 making tooth 12 snap several times from one notch to the next to lift arm 5 which is thus folded back to its resting position B.

To regulate the height at which arm 5 should come into position, one needs only turn to a greater or lesser degree adjusting screw 13 whose protrusion inside recess 18 determines the final inclination of bracket 4 by abutting against ledge 14.

The conformation of bracket 4 depends essentially on the geometry of the side windows of the vehicle. In fact, it should substantially follow the contour of the windows in order to both minimize the space it occupies and create as little aesthetic disturbance as possible by reducing the visibility of the device.

Preferably, the device according to the present invention will be furnished along with the seat or headrest in order to avoid complications which subsequent mounting could create. Alternatively, it can be supplied as an optional and, in that case, headrests would have to be provided that are predisposed for the application of the device.

The device according to the invention resolves the previously referred problem in a simple manner without inconveniences. In fact, in a collision, due to the simultaneous presence a safety belt and cushioned arm 5 of the device according to the invention, neither the position of the driver (or passenger) in his seat nor his grip on the steering wheel is substantially altered. This is because arm 5 and the safety belt provide two resting points for the body of the driver, making it impossible for him to bend forward while, at the same time, his arms and hands are left unaffected by the intervention of these safety devices.

It is to be understood that in the present description only one possible embodiment of the device according to the present invention has been illustrated and the various mechanical solutions adopted can be exchanged for other equivalent ones without departing from the scope of the invention itself.

## Claims

1. Safety device for automobiles for preventing the impact of the head of the driver or front-seat passenger against the front part of the interior of the vehicle, characterized in that it comprises an abutment member (5) for the forehead of the driver or passenger extending in front of the seat to which it is connected in such a way that it can be adjusted to the correct position with respect to the forehead of the driver or passenger.

2. Device according to claim 1, wherein said abutment member (5) is an arm hinged to support means (2,3,4) extending sideways from said seat in order to be able to be positioned in two angularly spaced positions.

3. Device according to claim 2, wherein said support means (2,3,4) comprise a bracket (4) having an adjustable inclination connected to a support (2) protruding from the side of said seat.

4. Device according to the previous claims, wherein the length of said bracket (4) is adjustable.

5. Device according to claim 4, wherein said bracket (4) is composed of two parts slidingly engaging in one another without the possibility of reciprocal rotation, comprising snapping means (17a,b) for blocking the sliding in certain pre-established, axially spaced positions, said arm (5) being hingedly connected to one of said parts.

6. Device according to the previous claims, wherein said bracket (4) is connected to said support (2) by means of a connection head (3) comprising a snapping claw clutch (11,12) for the variation of the inclination of said bracket (4).

7. Device according to claim 6, wherein between said support (2) and said connection head (3) adjusting means (13,14) are provided for regulating the maximum inclination of said bracket (4).

8. Device according to the previous claims, wherein said arm (5) is formed of a rigid core with external cushioning.

9. Device according to the previous claims, wherein the support (2) for said bracket (4) is connected to the headrest of the seat.

10. Device according to the previous claims, wherein said bracket (4) has a substantially square form.
